# EUROPÄISCHE PATENTSCHRIFT

(11) **EP 3 508 443 B1**
(45) Veröffentlichungstag und Bekanntmachung des Hinweises auf die Patenterteilung: **04.09.2024**
(21) Anmeldenummer: 18210350.7
(22) Anmeldetag: 05.12.2018
(51) Int. Cl.: B65G 21/06, B65G 47/66

(54) **FÖRDERBRÜCKE UND FÖRDERANORDNUNG MIT STRECKENFÖRDERER UND FÖRDERBRÜCKE**
CONVEYING BRIDGE AND CONVEYING ASSEMBLY WITH A CONVEYING BRIDGE
PONT TRANSPORTEUR ET DISPOSITIF DE TRANSPORT POURVU D'UN PONT TRANSPORTEUR

(30) Priorität: 04.01.2018 DE 102018200072
(43) Veröffentlichungstag der Anmeldung: 10.07.2019
(73) Patentinhaber: Robert Bosch GmbH, 70442 Stuttgart (DE)
(72) Erfinder: Ludwig, Peter, 72072 Tuebingen (DE); Buttau, Hans-Peter, 74348 Lauffen (DE); Schumacher-Kurz, Frank, 70599 Stuttgart (DE)

(56) Entgegenhaltungen:
- EP-A1- 0 489 278
- WO-A1-2017/011168
- WO-A1-97/41049
- FR-A1- 2 794 730
- FR-B1- 2 794 730
- US-A1- 2008 142 341

## Beschreibung

Die Erfindung betrifft eine Förderbrücke gemäß dem Oberbegriff des Patentanspruchs 1 und eine Förderanordnung mit einem Streckenförderer und einer Förderbrücke.

Zur Förderung von Gütern entlang weitgehend fester Wegverläufe bieten sich Streckenförderer an. Diese können beispielsweise in Bandbauweise mit einem Flachband als Fördermittel oder in Kettenbauweise mit einer Vielzahl kettengliedartig ineinandergreifender Elemente ausgestaltet sein. Am Übergang von einem Streckenförderer zum nächsten oder hin zu einer Bearbeitungsstation ergibt sich ein sogenannter Fördergraben, der daher rührt, dass das umlaufende Fördermittel dort mit einem Radius umgelenkt werden muss. Um zu vermeiden, dass das transportierte Gut in den Fördergraben fällt, dort verbleibt oder sogar beschädigt oder eingeklemmt wird, sind Verbindungssätze oder Überbrückungen mit eigenem Fördermittel bekannt. Sie schließen die vom Fördergraben gebildete Lücke der Förderebene, um die genannten, nachteiligen Effekte zu verhindern.

Einen vorrichtungstechnisch einfachen Überbrückungssatz zeigt die Druckschrift DE 20 2006 003 116 U1. Zwischen zwei in Förderrichtung beabstandeten Umlenkrollen zweier Förderbänder ist ein aus drei Umlenkrollen und einer Spannrolle bestehender Überbrückungssatz angeordnet. Dabei läuft um dessen Umlenkrollen ein endloses Förderband. Die Förderbänder, die der benachbarten Streckenförderer und das des Überbrückungssatz, bilden eine Förderebene. Dabei überspannt das Förderband des Fördersatzes in der Förderebene einen vergleichsweise langen Bereich, so dass ein darüber gefördertes, zu schweres Gut absacken könnte.

Einen vorrichtungstechnisch komplexer aufgebauten Überbrückungssatz zeigt die Druckschrift DE 10 2014 224 506 A1 der Anmelderin. Hier ist das Fördermittel des Überbrückungssatzes von mehreren, in Förderrichtung hintereinander angeordneter Transportwellen ausgebildet. Deren Abstand in Förderrichtung ist dadurch verringert, dass jede der Transportwellen in ihrer jeweiligen Längsrichtung wechselweise angeordnete Wellenbünde und Wellennuten aufweist. Dabei greifen die Bünde einer der Transportwellen jeweils in die Nuten benachbarter Transportwellen ein. Auf diese Weise ist eine Förderebene am Überbrückungssatz ausgebildet, die eine hohe Tragkraft aufweist.

Bietet letztgenannte Lösung den Vorteil der hohen Tragfähigkeit des Überbrückungssatzes, so erweist sich bei einem Defekt am Überbrückungssatz dessen Demontage als vergleichsweise aufwendig.

Die Druckschriften US 2008 014 23 41 A1, WO 97 410 49 und WO 2017 011 168 A1 zeigen jeweils eine Förderbrücke mit einer das Fördermittel enthaltenden Unterbaugruppe. Diese ist über beidseitig einer sich in Förderrichtung und vertikal zur Förderebene erstreckenden Mittelebene angeordnete Befestigungsmittel an einer restlichen Struktur der Förderbrücke lösbar befestigt. Insbesondere offenbart WO 2017 011 168 A1 eine Förderbrücke nach dem Oberbegriff des Anspruchs 1. Demgegenüber liegt der Erfindung die Aufgabe zugrunde, eine Überbrückungs- oder Förderbrücke zu schaffen, der mit weniger Aufwand zu montieren oder demontieren ist. Eine weitere Aufgabe liegt darin, einen Förderanordnung mit wenigstens einem Streckenförderer und einer derartigen Förderbrücke zu schaffen.

Die erste Aufgabe wird gelöst durch eine Förderbrücke mit den Merkmalen des Patentanspruchs 1, die zweite Aufgabe durch eine Förderanordnung mit den Merkmalen des Patentanspruchs 4.

Vorteilhafte Weiterbildungen der Erfindungen sind in den abhängigen Patentansprüchen beschrieben.

Eine Förderbrücke zum Überbrücken eines Fördergrabens, der an einem Endabschnitt eines Streckenförderers, insbesondere im Bereich einer rückführenden Umlenkung eines umlaufendes Fördermittels des Streckenförderers, ausgebildet ist, hat wenigstens eine drehbar gelagerte Antriebswelle und ein damit gekoppeltes, drehbar oder umlaufend gelagertes Fördermittel. Über das Fördermittel wird dabei zum Fördern eine Schubkraft auf das aufliegende, zu fördernde Gut übertragen. Vorzugsweise ist dies durch Haftreibung gewährleistet. Die Förderbrücke eine lösbar angeordnete Unterbaugruppe, die zumindest das Fördermittel der Förderbrücke aufweist. Als Unterbaugruppe ist im Sinne dieser Druckschrift eine zu einer Einheit vormontierte Menge an Bauteilen zu verstehen, die - vergleichbar mit einem einzelnen Bauteil - als ein Teil montierbar und demontierbar ist. Verglichen mit dem Stand der Technik, der die Förderbrücke lediglich in einzelne Bauteile aufgelöst bereitstellt, wodurch ein erheblicher Montage- und Demontageaufwand, insbesondere bei einem notwendigen Wechsel des Fördermittels der Transportvorrichtung notwendig ist, ist die Montage und Demontage der Unterbaugruppe bedeutend vereinfacht.

In einer bevorzugten Weiterbildung weist die Unterbaugruppe zudem bewegliche, insbesondere verschleißintensive Bauteile der Förderbrücke auf.

Insbesondere sind dies bewegliche Bauteile, mit dem Fördermittel gekoppelt sind. Insbesondere sind es beispielsweise eine Antriebswelle, von der das Fördermittel angetrieben ist, und / oder wenigstens eine Umlenkrolle, an der das Fördermittel der Förderbrücke umgelenkt ist, und / oder Lager und / oder Lageraufnahmen der genannten Bauteile.

Um das Fördermittel oder ein anderes verschleißintensives Bauteil warten oder austauschen zu können, ist in einer Weiterbildung der Förderbrücke die Unterbaugruppe zumindest zur Entnahme des Fördermittels oder des verschleißintensiven Bauteils zerlegbar.

In einer Weiterbildung ist das Fördermittel der Förderbrücke ein Zugmittel.

Insbesondere bei Verwendung des Zugmittels weist eine Weiterbildung der Förderbrücke eine hin zum Zugmittel stellbare Spannvorrichtung auf. Vorzugsweise ist dies eine drehbar gelagerte Welle, deren Drehachse exzentrisch an der Förderbrücke verschwenkbar ist.

Um das Fördergut sanft vom Streckenförderer zu entnehmen und/oder an diesen übergeben zu können, weist die Förderbrücke in einer Weiterbildung wenigstens ein sich in der Förderebene oder in die Förderebene erstreckendes Übergangsblech auf.

Das Fördermittel der Förderbrücke kann in einer Variante eine Welle oder eine Rolle oder eine Vielzahl von diesen sein. Als genanntes Zugmittel bietet sich die Verwendung eines Bandes, insbesondere eines Zahnbandes oder eines Zahnriemens als Fördermittel an. Die Rollen oder Wellen bieten dabei die Möglichkeit hoher Tragkraft, stellen jedoch einen höheren vorrichtungstechnischen Aufwand dar. Alternativ zum Band kann das Fördermittel als Kette ausgebildet sein. Allerdings sind hiermit nur mit vergleichsweise hohem vorrichtungstechnischem Aufwand, insbesondere durch einen feingliedrigen Aufbau der Kette, kleine Umlenkradien ermöglicht. Als günstiges und vorrichtungstechnisch wenig aufwendiges Fördermittel bietet sich das Band (Zahnband oder Zahnriemen) an. Das Band kann zahnlos ausgestaltet sein. Bei Verzahnung ist es vorteilhaft, diese mit der außenverzahnten Antriebswelle auszubilden.

Bei einer Weiterbildung mit einem Band oder Riemen als Fördermittel bietet sich zur Erhöhung der Abstützkraft gegenüber dem allein auf dem Band oder Riemen aufliegenden Gut eine Gleitplatte an, mit der das Band oder der Riemen unterlegt ist.

Erfindungsgemäß ist die Unterbaugruppe derart ausgestaltet, dass für ihre Montage und Demontage eine Richtung quer, insbesondere normal, zu einer Förderebene oder - fläche vorgesehen ist.

Vorzugsweise hat die Unterbaugruppe eine Befestigungsschnittstelle, über die die Montage und Demontage der Unterbaugruppe an der restlichen Förderbrücke oder am Endabschnitt des Streckenförderers ermöglicht ist.

Insbesondere weist die Befestigungsschnittstelle wenigstens ein Befestigungsmittel, beispielsweise ein Verrastungs- und / oder Verschraubungsmittel auf.

Erfindungsgemäß hat die Unterbaugruppe für ihre Befestigung an der restlichen Förderbrücke wenigstens ein Befestigungsmittel.

Erfindungsgemäß hat die Unterbaugruppe zu ihrer Ausrichtung an der restlichen Förderbrücke oder am Endabschnitt des Streckenförderers wenigstens einen Ausrichtabschnitt, der zum Formschluss mit einem Gegenabschnitt der restlichen Förderbrücke oder des Endabschnittes vorgesehen ist.

Im Grenzfall kann die Befestigungsschnittstelle beispielsweise lediglich eine Schraubverbindung und einen Ausrichtabschnitt aufweisen, um die Unterbaugruppe in allen 6 Freiheitsgraden gehemmt zu befestigen.

Vorzugsweise weist die Förderbrücke zwei Befestigungsmittel und einen Ausrichtungsabschnitt auf.

In einer Weiterbildung erstreckt sich das Befestigungsmittel in einer Richtung quer, insbesondere normal zur Förderebene oder -fläche.

Die Montagerichtung quer zur Förderebene oder -fläche, insbesondere normal dazu, erweist sich als vorteilhaft, da im industriellen Einsatz des Streckenförderers und der Förderbrücke häufig dies die günstigste Montage- und Demontagerichtung darstellt.

Erfindungsgemäß ist das wenigstens eine Befestigungsmittel und ist der wenigstens eine Ausrichtungsabschnitt einseitig einer sich in Förderrichtung und normal zur Förderebene oder -fläche erstreckenden Ebene angeordnet. Dadurch ist erfindungsgemäß ein Zugang zum wenigstens einen Befestigungsmittel und zum Ausrichtabschnitt zum Lösen der Unterbaugruppe nur von einer Seite notwendig. Dies erleichtert die Montage und Demontage der Förderbrücke.

In einer Weiterbildung sind das wenigstens eine Befestigungsmittel und der wenigstens eine Ausrichtabschnitt an einem einseitigen Rahmenabschnitt der Förderbrücke angeordnet.

Eine Förderanordnung hat wenigstens einen Streckenförderer, der insbesondere eine rückführende Umlenkung seines, insbesondere umlaufenden, Fördermittels aufweist. Zudem hat die Förderanordnung eine Förderbrücke, die gemäß wenigstens einem Aspekt der vorherigen Beschreibung ausgestaltet ist, und die einen Fördergraben im Bereich der Umlenkung überbrückt.

Die Förderbrücke ist vorzugsweise an einem Endabschnitt des Streckenförderers, insbesondere an einem Rahmenbauteil von diesem, angeordnet.

Vorzugsweise ist eine Triebwelle der Förderbrücke mit einer Triebwelle des Streckenförderers drehfest verbunden, wodurch das Fördermittel der Förderbrücke vom Streckenförderer angetrieben ist.

In einer Weiterbildung weist die Förderanordnung zwei Streckenförderer auf, deren Endabschnitte sich stirnseitig gegenüberstehen und zwischen denen die Förderbrücke überbrückt. Dabei ist die Förderbrücke an wenigstens einem der Endabschnitte befestigt.

In einer Weiterbildung schließen Übergangsbleche der Förderbrücke eine Restlücke zwischen der Förderbrücke und den beiden Streckenförderern.

In einer alternativen Weiterbildung hat die Förderanordnung den Streckenförderer, die Förderbrücke und eine Bearbeitungsstation, wobei die Förderbrücke zwischen dem Endabschnitt des Streckenförderers und der Bearbeitungsstation angeordnet ist.

Ein Ausführungsbeispiel einer erfindungsgemäßen Förderanordnung und ein Ausführungsbeispiel einer erfindungsgemäßen Förderbrücke sind in den Zeichnungen dargestellt. Anhand der Figuren dieser Zeichnungen wird die Erfindung nun näher erläutert.

Es zeigen:
Figur 1 eine erfindungsgemäße Förderanordnung mit Streckenförderer und Förderbrücke gemäß einem Ausführungsbeispiel, in einer perspektivischen Ansicht,
Figur 2 einer erfindungsgemäßen Förderbrücke der Förderanordnung gemäß einem Ausführungsbeispiel, in einer perspektivischen Ansicht,
Figur 3 die Förderbrücke gemäß Figur 2 mit abgenommener Abdeckung, in einer perspektivischen Ansicht,
Figur 4 die Förderbrücke gemäß Figur 2 in einer Explosionsdarstellung,
Figur 5 die Förderbrücke gemäß den Figuren 1, 2 und 4, in einer anderen perspektivischen Ansicht,
Figur 6 die Förderbrücke gemäß den vorangegangenen Figuren in einem Längsschnitt, quer zur Förderrichtung, und
Figur 7 die Förderbrücke gemäß den vorangegangenen Figuren in einer vollständigen Explosionsdarstellung.

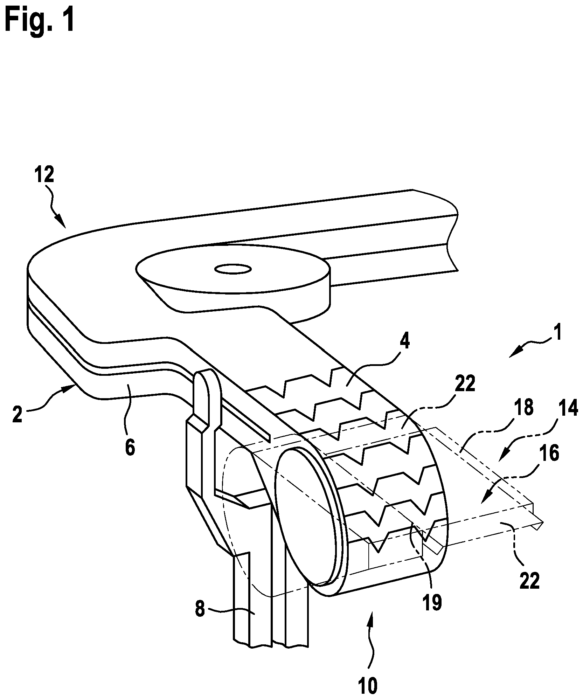

Gemäß Figur 1 hat eine Förderanordnung 1 einen Streckenförderer 2, der als Kettenförderer ausgestaltet ist. Der Kettenförderer 2, in Figur 1 ist lediglich ein Kettenförderer 2 dargestellt, hat ein als Kette ausgestaltetes Fördermittel 4, welches auf einem Rahmen 6 des Kettenförderers 2 endlos umläuft. Der Rahmen 6 ist auf einer Vielzahl von Stützen 8 bodenseitig abgestützt. Die Kette 4 dient an ihrer in Figur 1 dargestellten Oberseite zur Förderung eines Fördergutes (nicht dargestellt). Dieses liegt im Betrieb auf der Kette 4 auf. Die Kette 4 ist dabei derart ausgestaltet, dass sie sowohl in einer Richtung normal zur Förderebene als auch in einer Richtung parallel zur Förderebene beugbar ist. Die erstgenannte Beugbarkeit dient im Bereich eines Endabschnitts 10 des Kettenförderers 2 zur Umlenkung der Kette 4 und zu deren Rückführung, letztgenannte Beugbarkeit ermöglicht beispielsweise im Bereich einer Kurve 12 den Richtungswechsel des Streckenförderers 2.

Die Förderanordnung 1 umfasst im Ausführungsbeispiel einen weiteren, an den Endabschnitt 10 anschließenden Streckenförderer (nicht dargestellt). Aufgrund des Umlenkradius im Bereich des Endabschnittes 10 entsteht dabei zwischen den Streckenförderern 2 ein Fördergraben, der V-förmig ausgestaltet ist. Um diesen Fördergraben zu überbrücken ist eine Förderbrücke 14 vorgesehen. Sie überspannt mit einem als Förderband 16 ausgestalteten Fördermittel den Fördergraben und ermöglicht so den Transport des Fördergutes vom dargestellten Streckenförderer 2 hin zum anschließenden Streckenförderer (nicht dargestellt).

In Figur 1 ist die Förderbrücke 14 transparent dargestellt, sodass der im Bereich des Endabschnitts 10 ausgebildete Fördergraben ersichtlich ist.

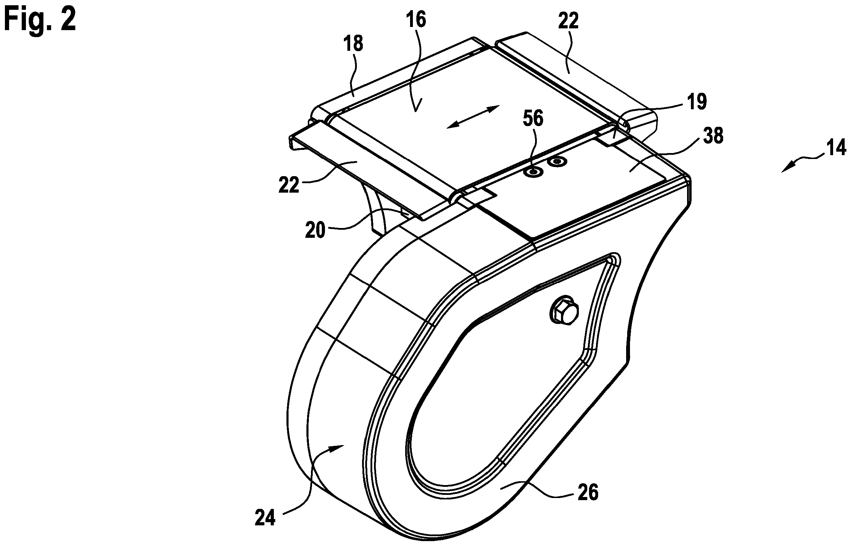

Figur 2 zeigt die Förderbrücke 14 in einer, verglichen mit Figur 1 entgegen dem Uhrzeigersinn gedrehten, perspektivischen Ansicht. Die Förderbrücke 14 hat gemäß Figur 2 ein als innenverzahntes Zahnband ausgestaltetes Förderband 16, welches an Umlenkrollen (nicht dargestellt) umgelenkt und von einer außenverzahnten Antriebswelle (nicht dargestellt) angetrieben ist. Die Förderbrücke 14 hat zudem einen Rahmen, von dem in Figur 2 Rahmenabschnitte 18, 19 und ein Eingriffsschutz 20 sichtbar sind. Eine Förderebene des Förderbandes 16 erstreckt sich etwa entlang der Längserstreckung des Rahmenabschnitts 18. Eine Förderrichtung des Förderbandes 16 entspricht dem in Figuren 1 und 2 angebrachten Doppelpfeil. An den Rahmenabschnitten 18, 19 sind Umlenkrollen (nicht dargestellt) drehbar gelagert, an denen das Förderband 16 in Figur 2 nach unten umgelenkt ist. An diese Umlenkbereiche schließt an jeder Seite ein Übergangs- oder Überbrückungsblech 22 an, durch welches ein Restspalt zwischen der Förderebene der Förderkette 4 und der Förderebene des Förderbandes 16 überbrückt ist. Die Überbrückungsbleche 22 sind jeweils an den Rahmenabschnitten 18, 19 der Förderbrücke 14 mit Schrauben befestigt.

Die Förderbrücke 14 hat keinen eigenen Antrieb, sondern wird vom Antrieb des Streckenförderers 2 angetrieben. Hierzu ist ein Zahnriemengetriebe 24 vorgesehen, welches sich gemäß Figur 1 und 2 unter einer Gehäuseabdeckung 26 befindet.

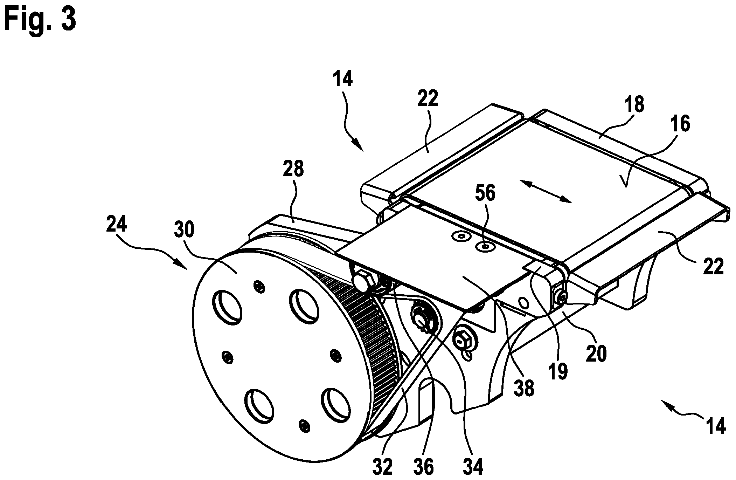

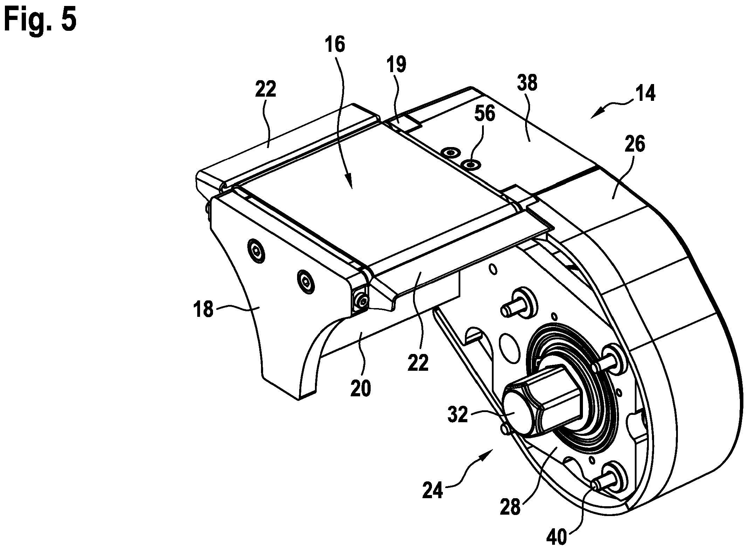

Figur 3 zeigt die Förderbrücke 14 gemäß Figur 2 mit abgenommener Gehäuseabdeckung 26. Darunter verbirgt sich das Zahnriemengetriebe 24. Dieses hat eine Rahmenplatte 28, an der ein außenverzahntes Antriebsrad 30 drehbar gelagert ist. Gemäß Figur 5 weist das Antriebsrad 30 auf seiner zum Streckenförderer 2 gewandten Seite einen Durchtrieb 32 auf, der die Rahmenplatte 28 durchsetzt und drehfest mit einer Antriebswelle des Streckenförderers 2 im Bereich des Endabschnitts 10 koppelbar ist. Die Rahmenplatte 28 ist zur Befestigung am Rahmen 6 des Streckenförderers 2 gemäß Figur 1 vorgesehen. Die Rahmenplatte 28 stellt somit die feste Verbindung der Förderbrücke 14 mit dem Streckenförderer 2 dar.

Das außenverzahnte Antriebsrad 30 ist von einem innenverzahnten Zahnriemen 32 umschlungen. Dieser treibt ein Ritzel einer außenverzahnten Antriebswelle 34 der Förderbrücke 14 an. Die Förderbrücke 14 hat des Weiteren eine exzentrisch verstellbare Spannwelle 36, die zum Spannen des Zahnriemens 32 eine Kraft von normal außen auf den Zahnriemen 32 aufprägt. Gegen einen ungewollten Eingriff von oberhalb der Förderebene sind die Antriebswelle 34 und die Spannwelle 36 über ein lösbares Abdeckblech 38 abgedeckt.

Figur 5 zeigt die Förderbrücke 14 gemäß den Figuren 1 und 2 in einer perspektivischen Ansicht derart, dass der Durchtrieb 32 sichtbar ist. Zu erkennen ist, dass die Rahmenplatte 28 von vier umfänglich um den Durchtrieb 32 gleichverteilten Schrauben 40 zur Befestigung am Rahmen 6 des Streckenförderers 2 gemäß Figur 1 durchsetzt ist. Gut zu erkennen in Figur 5 ist auch der Eingriffsschutz 20, der gegen einen ungewollten Eingriff im Bereich der außenverzahnten Antriebswelle 34 gemäß Figur 3 schützt. Des Weiteren ist insbesondere in den Figuren 3 und 5 gut zu erkennen, dass der Rahmenabschnitt 18 V-förmig ausgestaltet ist, wobei seine beiden V-Schenkel nach konkav innen geformt sind. Diese konkave Form ist an den Umlenkradius der Förderkette 4 am Endabschnitt 10 gemäß Figur 1 angepasst.

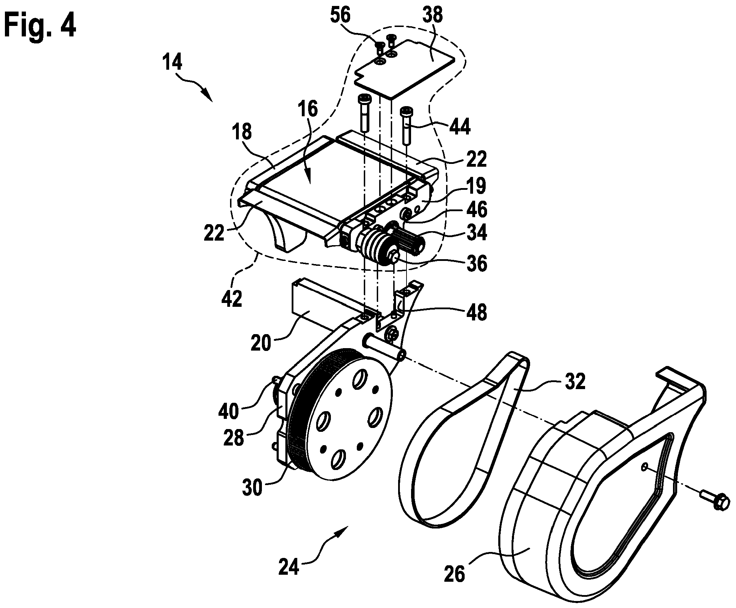

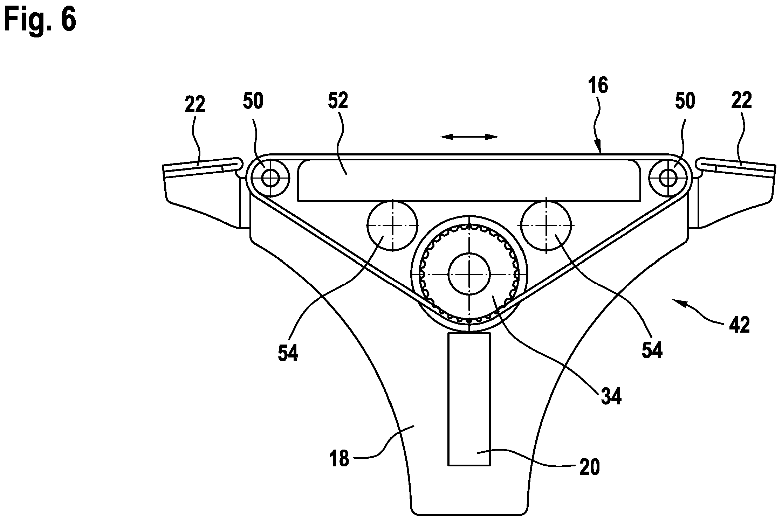

Figur 6 zeigt die Unterbaugruppe 42 in einem Längsschnitt, der in Förderrichtung und quer zur Antriebswelle 34 geführt ist. Dabei ist gut zu erkennen, dass das Förderband 16 im Bereich der Übergangsbleche 22 an je einer gleitgelagerten Umlenkrolle 50 der Unterbaugruppe 42 umgelenkt ist. Eine dritte Umlenkung ist von der außenverzahnten Antriebswelle 34 im Bereich des untenliegenden Eingriffsschutzes 20 gebildet. Zur Abstützung des Förderbandes 16 im Bereich der Förderebene, also dort wo das Fördergut auf dem Förderband 16 aufliegt, ist das Förderband 16 mit einer Gleitplatte 52 unterlegt. Letztgenannte ist durch zwei, die Rahmenabschnitte 18 und 19 gemäß Figur 4 verbindende, Bolzen 54 abgestützt. Zur Fixierung der Gleitplatte 52 in Förderrichtung (Doppelpfeil) ist die Gleitplatte 52 mit den Rahmenabschnitten 18, 19 verstiftet.

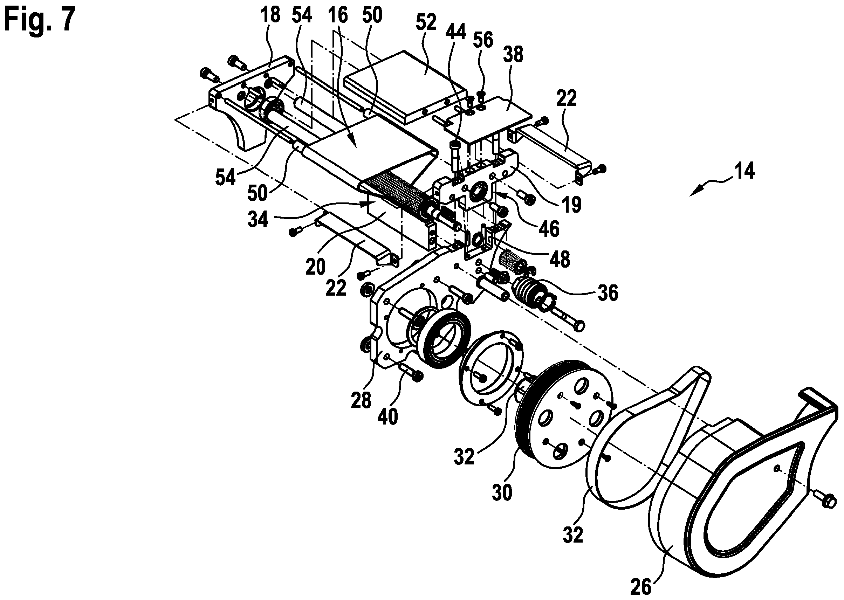

Figur 7 zeigt die Förderbrücke 14 in einer vollständigen Explosionsdarstellung. Dabei ist auch die Unterbaugruppe 42 komplett explodiert dargestellt. Auf diese Weise wird ersichtlich, dass die Unterbaugruppe derart zerlegbar ist, dass jegliches bewegliche oder verschleißintensive Teil, beispielsweise die Umlenkrolle 50, die Antriebswelle 34 oder das Förderband 16, individuell austauschbar ist.

Die Beschreibung des Lösens der Unterbaugruppe 42 von der restlichen Förderbrücke 14 erfolgt unter Betrachtung der Figuren 2 und 4: Zunächst werden die Schrauben 56 gelöst (vergleiche Figur 2), über die das Abdeckblech 38 der Unterbaugruppe 42 befestigt ist. Gemäß Figur 4 werden dadurch die beiden Schrauben 44, die die Unterbaugruppe 42 an der Rahmenplatte 28 halten, zugänglich. Diese werden gemäß Figur 4 entfernt. Im nächsten Schritt muss der Zahnriemen 32 von der Antriebswelle 34 abgenommen werden. Dies gelingt, indem die Spannwelle 36 durch Lösen einer Fixierungsschraube aus ihrer hin zum Zahnriemen 32 geschwenkten Position ausgeschwenkt wird. Dadurch wird der Zahnriemen 32 entspannt und kann von der Antriebswelle 34, genauer gesagt von deren Antriebsritzel quer zur Förderrichtung abgezogen werden. Nun ist die Unterbaugruppe 42 frei und kann gemäß Figur 4 aus der Rahmenplatte 28 abgezogen werden. Zum Wechsel des beschädigten oder zu ersetzenden Bauteils der Unterbaugruppe 42 wird letztgenannte dann bedarfsgerecht zerlegt. Im Folgenden, nach Reparatur oder Austausch des defekten Bauteils oder der kompletten Unterbaugruppe 42, wird die Unterbaugruppe 42 in umgekehrter Reihenfolge in die restliche Förderbrücke 14 eingesetzt und befestigt.

Offenbart ist eine Förderbrücke zur Förderung eines Fördergutes und zur Überbrückung eines Fördergrabens am Endabschnitt eines Streckenförderers, die eine lösbare Unterbaugruppe hat, die wenigstens ein angetriebenes und / oder bewegliches, insbesondere verschleißgefährdetes, Bauteil der Förderbrücke enthält.

Offenbart ist weiterhin eine Förderanordnung mit der Förderbrücke und wenigstens einem daran anschließenden Streckenförderer und / oder wenigstens einer daran anschließenden Prozessstation zur Manipulation des Fördergutes.

### Bezugszeichenliste

- 1: Förderanordnung
- 2: Streckenförderer
- 4: Förderkette
- 6: Rahmen
- 8: Stütze
- 10: Endabschnitt
- 12: Kurve
- 14: Förderbrücke
- 16: Förderband
- 18, 19: Rahmenabschnitt
- 20: Eingriffsschutz
- 22: Überbrückungsblech
- 24: Zahnriemengetriebe
- 26: Gehäuseabdeckung
- 28: Rahmenplatte
- 30: Antriebsrad
- 32: Zahnriemen
- 34: Antriebswelle
- 36: Spannwelle
- 38: Abdeckblech
- 40: Schraube
- 42: Unterbaugruppe
- 44: Schraube
- 50: Umlenkrolle
- 52: Gleitplatte
- 54: Bolzen
- 56: Schraube

## Patentansprüche

1. Förderbrücke zum Überbrücken eines Fördergrabens an einem Endabschnitt (10) eines Streckenförderers (2), mit einer drehbar gelagerten Antriebswelle (34) und einem damit gekoppelten, drehbar oder umlaufend gelagerten Fördermittel (16) zum Fördern eines Gutes, und mit einer lösbar befestigten Unterbaugruppe (42), die eine zu einer Einheit vormontierte Menge an Bauteilen ist, und die als ein Teil, in einer Richtung quer zu einer Förderebene oder -fläche, montierbar und demontierbar ist, und die zumindest das Fördermittel (16) enthält, wobei die Unterbaugruppe (42) für ihre Befestigung an der restlichen Förderbrücke wenigstens ein Befestigungsmittel (44) und zu ihrer Ausrichtung an der restlichen Förderbrücke wenigstens einen Ausrichtabschnitt (46) zum Formschluss mit einem Gegenabschnitt (48) der restlichen Förderbrücke hat, **dadurch gekennzeichnet, dass** das wenigstens eine Befestigungsmittel (44) und der wenigstens eine Ausrichtabschnitt (46) nur einseitig einer sich in Förderrichtung und normal zur Förderebene oder -fläche erstreckenden Ebene angeordnet sind.

2. Förderbrücke nach Anspruch 1, deren Fördermittel eine Welle ist, oder deren Fördermittel ein Band, insbesondere ein Zahnband (16) oder ein Zahnriemen ist.

3. Förderbrücke nach Anspruch 1 oder 2, wobei das wenigstens eine Befestigungsmittel (44) an einem einseitigen Rahmenabschnitt (19) angeordnet ist.

4. Förderanordnung mit wenigstens einem Streckenförderer (2) und mit einer Förderbrücke (14), die gemäß einem der vorgehenden Ansprüche ausgestaltet ist, und die an einem Endabschnitt (10) des Streckenförderers (2) zur Überbrückung eines dortigen Fördergrabens angeordnet ist.

## Claims

1. Conveying bridge for bridging a conveying trench at an end portion (10) of a drift conveyor (2), having a rotatably mounted drive shaft (34) and conveying means (16), which are coupled thereto and are mounted in a rotatable or revolving manner, for conveying stock, and having a releasably fastened subassembly (42), which is a quantity of components preassembled to form a unit, and which can be mounted and can be removed as one part in a direction transversely with respect to a conveying plane or conveying surface, and which contains at least the conveying means (16), wherein the subassembly (42), for its fastening to the rest of the conveying bridge, has at least one fastening means (44) and, for its alignment with the rest of the conveying bridge, has at least one alignment portion (46) for the form-fitting connection to a mating portion (48) of the rest of the conveying bridge, **characterized in that** the at least one fastening means (44) and the at least one alignment portion (46) are arranged only on one side of a plane extending in the conveying direction and normally to the conveying plane or conveying surface.

2. Conveying bridge according to Claim 1, the conveying means of which is a shaft, or the conveying means of which is a belt, in particular a toothed belt (16).

3. Conveying bridge according to Claim 1 or 2, wherein the at least one fastening means (44) is arranged on a one-sided frame portion (19).

4. Conveying assembly having at least one drift conveyor (2) and having a conveying bridge (14) which is configured according to one of the preceding claims and which is arranged at an end portion (10) of the drift conveyor (2) for bridging a conveying trench there.

## Revendications

1. Pont de transport pour ponter une tranchée de transport à une section d'extrémité (10) d'un transporteur de ligne (2), avec un arbre d'entraînement (34) monté de manière rotative et un moyen de transport (16) couplé à celui-ci, monté de manière rotative ou circulante pour transporter un produit, et avec un sous-ensemble (42) fixé de manière amovible, qui est un ensemble de composants pré-assemblés en une unité, et qui peut être monté et démonté en tant que pièce, dans une direction transversale à un plan ou une surface de transport, et qui contient au moins le moyen de transport (16), le sous-ensemble (42) ayant, pour sa fixation au reste du pont transporteur, au moins un moyen de fixation (44) et, pour son alignement sur le reste du pont transporteur, au moins une section d'alignement (46) pour la liaison par complémentarité de forme avec une section complémentaire (48) du reste du pont transporteur, **caractérisé en ce que** l'au moins un moyen de fixation (44) et l'au moins une section d'alignement (46) sont agencés seulement d'un côté d'un plan s'étendant dans la direction de transport et perpendiculairement au plan ou à la surface de transport.

2. Pont transporteur selon la revendication 1, dont le moyen de transport est un arbre, ou dont le moyen de transport est une bande, notamment une bande dentée (16) ou une courroie dentée.

3. Pont transporteur selon la revendication 1 ou 2, dans lequel l'au moins un moyen de fixation (44) est agencé sur une section de cadre (19) d'un côté.

4. Agencement de transport avec au moins un transporteur de ligne (2) et avec un pont transporteur (14), qui est conçu selon l'une quelconque des revendications précédentes, et qui est agencé sur une section d'extrémité (10) du transporteur de ligne (2) pour ponter une tranchée de transport à cet endroit.
